# EUROPEAN PATENT APPLICATION

(11) **EP 4 783 554 A1**
(43) Date of publication of application: **29.07.2026**
(21) Application number: 24876045.6
(22) Date of filing: 31.05.2024
(51) Int. Cl.: H04L 67/1095

(54) **DATA SYNCHRONIZATION METHOD, COMPUTING DEVICE AND COMPUTING DEVICE CLUSTER**

(30) Priority: 14.10.2023 CN 202311335497
(71) Applicant: HUAWEI TECHNOLOGIES CO., LTD., Shenzhen 518129 (CN)
(72) Inventor: LI, Dongfeng, Shenzhen, Guangdong 518129 (CN); ZHANG, Jinchao, Shenzhen, Guangdong 518129 (CN); HUANG, Jinhua, Shenzhen, Guangdong 518129 (CN); QIN, Mingyang, Shenzhen, Guangdong 518129 (CN)
(74) Representative: Goddar, Heinz J.
(86) International application number: PCT/CN2024/096799
(87) International publication number: WO 2025/077219

(57) **Abstract**

This application discloses a data synchronization method, a compute device, and a compute device cluster, and pertains to the field of data transmission technologies. The method includes: A first compute unit transmits, before obtaining first data, a synchronization preparation request to a first communication unit. The first communication unit performs, based on the synchronization preparation request, a preparation operation needed for a data synchronization operation. The first compute unit transmits, after obtaining the first data, a synchronization initiation request to the first communication unit. The first communication unit sends, based on the synchronization initiation request, a notification to a second communication unit in a second compute device, where the notification indicates that the first communication unit is capable of performing the data synchronization operation, and data synchronization needs to be performed between the second compute device and the first compute device. The first communication unit performs the data synchronization operation after all communication units in multiple compute devices are capable of performing the data synchronization operation. In this application, data synchronization efficiency can be ensured by reducing total time taken for data synchronization.

## Description

This application claims priority to Chinese Patent Application No. 202311335497.8, filed on October 14, 2023 and entitled "DATA SYNCHRONIZATION METHOD, COMPUTE DEVICE, AND COMPUTE DEVICE CLUSTER", which is incorporated herein by reference in its entirety.

### TECHNICAL FIELD

This application relates to the field of data transmission technologies, and in particular, to a data synchronization method, a compute device, and a compute device cluster.

### BACKGROUND

In recent years, training neural networks using training cards is widely used. As neural network models and data sets used for model training continue to grow in size, using large-scale compute clusters and parallel computation to accelerate training becomes a trend. Data parallelism is frequently used for parallel computation. In this approach, multiple training cards jointly train a same neural network. Each training card stores a complete copy of the neural network model. A training data set is divided into multiple data subsets, and each training card trains the neural network based on one of these data subsets. After obtaining first data based on the data set, each training card needs to synchronize data with other training cards based on the first data, so that all these training cards update a model parameter of the neural network based on synchronized data.

Currently, data synchronization between training cards is implemented by using a communication operation, and a computation operation and a communication operation on each training card are performed in serial. For example, all computation operations and communication operations share a single computation stream, and all computation operations and all communication operations required for training are performed in serial.

However, total time spent on the computation operations and the communication operations is long, resulting in extended training time for neural networks.

### SUMMARY

This application provides a data synchronization method, a compute device, and a compute device cluster. In this application, data synchronization efficiency can be ensured by reducing total time taken for data synchronization. When this application is used in neural network training, training duration for a neural network can be optimized. Technical solutions provided in this application are as follows:

According to a first aspect, this application provides a data synchronization method. The method is applied to multiple compute devices. The method includes: A first compute unit transmits, before obtaining first data, a synchronization preparation request to a first communication unit, where the synchronization preparation request indicates the first communication unit to perform a data synchronization operation based on the first data, the first compute device includes the first compute unit and the first communication unit, and the first compute device is any one of the multiple compute devices. The first communication unit performs, based on the synchronization preparation request, a preparation operation needed for the data synchronization operation. The first compute unit transmits, after obtaining the first data, a synchronization initiation request to the first communication unit, where the synchronization initiation request indicates the first communication unit to initiate the data synchronization operation. The first communication unit sends a notification to a second communication unit based on the synchronization initiation request, where the notification indicates that the first communication unit is capable of performing the data synchronization operation, a second compute device includes a second compute unit and the second communication unit, and the second compute device is any one of the multiple compute devices except the first compute device. The first communication unit performs the data synchronization operation after all communication units in the multiple compute devices are capable of performing the data synchronization operation.

It can be learned that before the first communication unit performs the data synchronization operation, the first compute unit needs to obtain the first data needed for performing the data synchronization operation, and the first communication unit needs to perform the preparation operation needed for performing the data synchronization operation. The synchronization preparation request is sent before the first compute unit obtains the first data, the synchronization initiation request is sent after the first compute unit obtains the first data, and after obtaining the synchronization preparation request, the first communication unit performs the preparation operation needed for the data synchronization operation. In this way, a process of performing the preparation operation by the first communication unit and a process of obtaining the first data by the first compute unit can be performed in parallel, so that time needed for performing the preparation operation can at least partially overlap with time for the first compute unit to obtain the first data, thereby effectively reducing total time taken by the first compute unit to obtain the first data and the first communication unit to perform the preparation operation. In addition, after obtaining the synchronization initiation request, the first communication unit sends the notification to second communication units in multiple second compute devices, to indicate that the first communication unit is capable of performing the data synchronization operation. After determining that all of the multiple compute devices are capable of performing the data synchronization operation, the first communication unit performs the data synchronization operation based on the first data. That is, a prerequisite for the communication units of all of the multiple compute devices to perform the data synchronization operation further includes: The communication units of all of the multiple compute devices are capable of performing the data synchronization operation. After the prerequisite is met, the communication units perform the data synchronization operation. In this way, it can be ensured that the data synchronization operation is performed only after the communication units of all of the multiple compute devices are in a state in which the data synchronization operation can be performed, to ensure that effective data synchronization can be performed between the communication units in the multiple compute devices, and ensure data synchronization efficiency. Therefore, according to the method, data synchronization efficiency can be ensured by reducing total time taken for data synchronization.

When used in a scenario in which a single neural network is trained by multiple training cards, the data synchronization method significantly boosts parallel model training efficiency between the multiple training cards. It reduces total time taken for data synchronization between the multiple training cards, thereby shorten training duration of the neural network. This method optimizes the training duration of the neural network and ensures data synchronization efficiency among the multiple training cards. Similarly, applying the data synchronization method to another scenario that requires data synchronization between multiple compute devices can yield a similar effect.

In an implementation, before the first communication unit sends the notification to the second communication unit based on the synchronization initiation request, the method further includes: The first communication unit obtains the synchronization initiation request after completing the preparation operation. In this way, in a process of performing the preparation operation, the first communication unit does not need to scan for the synchronization initiation request, so that more resources can be used to perform the preparation operation, thereby ensuring efficiency of performing the preparation operation.

Optionally, the first compute device further includes a first message storage area. That the first compute unit transmits the synchronization preparation request to the first communication unit includes: The first compute unit writes the synchronization preparation request to the first message storage area, and the first communication unit reads the synchronization preparation request from the first message storage area; and/or the first compute unit transmits the synchronization initiation request to the first communication unit includes: The first compute unit writes the synchronization initiation request to the first message storage area, and the first communication unit reads the synchronization initiation request from the first message storage area.

When a message is transmitted between the compute unit and the communication unit through a message storage area, because the message storage area has a function of recording the message, the compute unit can continue to perform another operation (such as a computation operation) after writing a request to the message storage area, rather than waiting for the first communication unit to respond to the message. Therefore, a process of continuing to perform the another operation by the compute unit and a process of responding to the message by the communication unit can be performed in parallel, so that total time taken by the process of continuing to perform the another operation by the compute unit and the process of responding to the message by the communication unit is reduced.

When performing the data synchronization operation, the first communication unit not only needs to provide data for the second communication unit, but also needs to obtain data from the second communication unit, and provides first synchronization data for the first compute unit based on the obtained data. In an implementation, that the first communication unit performs the data synchronization operation includes: The first communication unit performs an operation on the first data, enabling the second communication unit to obtain the first data. The first communication unit obtains second data from the second communication unit, where the second data is data based on which the second communication unit performs the data synchronization operation. The first communication unit provides the first synchronization data for the first compute unit, where the first synchronization data is obtained by the first communication unit based on the second data.

Optionally, the first synchronization data may be the second data, a result of performing a specified operation on the second data, or a result of performing a specified operation on the second data and the first data. When the first synchronization data is a result of performing a specified operation on the second data, the method further includes: The first communication unit performs the specified operation based on the second data to obtain the first synchronization data. When the first synchronization data is a result of performing a specified operation on the second data and the first data, the method further includes: The first communication unit performs the specified operation based on the first data and the second data to obtain the first synchronization data.

Optionally, the specified operation is optionally indicated by the first compute unit. For example, the synchronization preparation request carries operation type information. The operation type information indicates a manner in which the first communication unit obtains the first synchronization data based on the second data. That is, the operation type information indicates specific data based on the first synchronization data is obtained, whether to perform the specified operation on the data to obtain the first synchronization data, and a type of the specified operation.

Optionally, the specified operation includes one or more of the following: a mathematical operation and a reordering operation. For example, the mathematical operation may be a mapping operation (for example, Reduce or AllReduce), subtraction, min, max, averaging, or the like. The reordering operation may be a concatenation operation or the like.

In an implementation, the synchronization preparation request carries a destination storage address used to store the first synchronization data. That the first communication unit provides the first synchronization data for the first compute unit includes: The first communication unit stores the first synchronization data in the destination storage address, so that the first compute unit obtains the first synchronization data from the destination storage address.

Similarly, the synchronization preparation request carries a source storage address used to store the first data. Before the first communication unit performs the operation on the first data, the method further includes: The first communication unit obtains the first data from the source storage address.

Optionally, the first compute device further includes a first shared storage area. Both the first communication unit and the second communication unit are capable of reading data stored in the first shared storage area. That the first communication unit performs the operation on the first data, enabling the second communication unit to obtain the first data includes: The first communication unit stores the first data in the first shared storage area, enabling the second communication unit to read the first data from the first shared storage area.

Similarly, the second compute device further includes a second shared storage area. Both the first communication unit and the second communication unit are capable of reading data stored in the second shared storage area. That the first communication unit obtains the second data from the second communication unit includes: The first communication unit reads the second data from the second shared storage area associated with the second communication unit, where the second shared storage area associated with the second communication unit is a shared storage area to which the second communication unit writes the second data.

In an implementation, before the first communication unit performs the data synchronization operation, the method further includes: The first communication unit determines that all of the multiple compute devices are capable of performing the data synchronization operation. An implementation process includes: The first communication unit obtains the synchronization initiation request transmitted by the first compute unit. The first communication unit determines that the second communication unit is capable of performing the data synchronization operation.

According to a second aspect, this application provides a first compute device. The first compute device includes a first compute unit and a first communication unit. The first compute unit is configured to transmit, before obtaining first data, a synchronization preparation request to the first communication unit, where the synchronization preparation request indicates the first communication unit to perform a data synchronization operation based on the first data. The first communication unit is configured to perform, based on the synchronization preparation request, a preparation operation needed for the data synchronization operation. The first compute unit is further configured to transmit, after obtaining the first data, a synchronization initiation request to the first communication unit, where the synchronization initiation request indicates the first communication unit to initiate the data synchronization operation. The first communication unit is further configured to send, based on the synchronization initiation request, a notification to a second communication unit, where the notification indicates that the first communication unit is capable of performing a data synchronization operation, the second communication unit belongs to a second compute device, and data synchronization needs to be performed between the second compute device and the first compute device. The first communication unit is further configured to perform the data synchronization operation after all communication units in multiple compute devices that need to perform data synchronization with the first compute device are capable of performing the data synchronization operation.

Optionally, the first communication unit is further configured to obtain the synchronization initiation request after completing the preparation operation.

Optionally, the first compute device further includes a first message storage area. The first compute unit is specifically configured to write the synchronization preparation request to the first message storage area, and the first communication unit reads the synchronization preparation request from the first message storage area, and/or the first compute unit is specifically configured to write the synchronization initiation request to the first message storage area, and the first communication unit reads the synchronization initiation request from the first message storage area.

Optionally, that the first communication unit performs the data synchronization operation specifically includes: performing an operation on the first data, enabling the second communication unit to obtain the first data; obtaining second data from the second communication unit, where the second data is data based on which the second communication unit performs the data synchronization operation; and providing first synchronization data for the first compute unit, where the first synchronization data is obtained by the first communication unit based on the second data.

Optionally, the first communication unit is further configured to perform a specified operation based on the second data to obtain the first synchronization data.

Optionally, the first communication unit is further configured to perform a specified operation based on the first data and the second data to obtain the first synchronization data.

Optionally, the specified operation is indicated by the first compute unit.

Optionally, the specified operation includes one or more of the following: a mathematical operation and a reordering operation.

Optionally, the synchronization preparation request carries a destination storage address used to store the first synchronization data. The first communication unit is specifically configured to store the first synchronization data in the destination storage address, so that the first compute unit obtains the first synchronization data from the destination storage address.

Optionally, the synchronization preparation request carries a source storage address used to store the first data. The first communication unit is further configured to obtain the first data from the source storage address.

Optionally, the first compute device further includes a first shared storage area, and both the first communication unit and the second communication unit are capable of reading data stored in the first shared storage area. The first communication unit is specifically configured to store the first data in the first shared storage area, enabling the second communication unit to read the first data from the first shared storage area.

Optionally, the second compute device further includes a second shared storage area, and both the first communication unit and the second communication unit are capable of reading data stored in the second shared storage area. The first communication unit is specifically configured to read the second data from the second shared storage area associated with the second communication unit, where the second shared storage area associated with the second communication unit is a shared storage area to which the second communication unit writes the second data.

Optionally, the first communication unit is further configured to obtain the synchronization initiation request transmitted by the first compute unit; and the first communication unit is further configured to determine that the second communication unit is capable of performing the data synchronization operation.

According to a third aspect, this application provides a compute device, including a storage and a processor. The storage stores program instructions. The processor runs the program instructions to perform the method provided in any one of the first aspect and the possible implementations of the first aspect in this application.

According to a fourth aspect, this application provides a compute device cluster, including multiple compute devices. The multiple compute devices include multiple processors and multiple storages, the multiple storages store program instructions, and the multiple processors run the program instructions, so that the compute device cluster performs the method provided in any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a compute device, the compute device is enabled to perform the method provided in any one of the first aspect and the possible implementations of the first aspect in this application.

According to a sixth aspect, this application provides a computer program product including instructions. When the computer program product runs on a computer, the computer is enabled to perform the method provided in any one of the first aspect and the possible implementations of the first aspect in this application.

### BRIEF DESCRIPTION OF DRAWINGS

FIG. 1 is a diagram of an implementation scenario related to a data synchronization method according to an embodiment of this application;
FIG. 2 is a diagram of implementing a compute unit and a communication unit in a heterogeneous mode according to an embodiment of this application;
FIG. 3 is a diagram of implementing a compute unit and a communication unit in a homogeneous mode according to an embodiment of this application;
FIG. 4 is a diagram of an implementation scenario related to another data synchronization method according to an embodiment of this application;
FIG. 5 is a diagram of an implementation scenario related to an alternative data synchronization method according to an embodiment of this application;
FIG. 6 is a diagram of an implementation scenario related to a further alternative data synchronization method according to an embodiment of this application;
FIG. 7 is a flowchart of a data synchronization method according to an embodiment of this application;
FIG. 8 is a flowchart of a process of performing a data synchronization operation by a first communication unit according to an embodiment of this application;
FIG. 9 is a diagram of a gradient synchronization process in a process of jointly training a same neural network by multiple training cards according to an embodiment of this application;
FIG. 10 is a diagram of a structure of a compute device according to an embodiment of this application; and
FIG. 11 is a diagram of a structure of a compute device cluster according to an embodiment of this application.

### DESCRIPTION OF EMBODIMENTS

To make the objectives, technical solutions, and advantages of this application clearer, the following further describes implementations of this application in detail with reference to the accompanying drawings.

Currently, data parallelism is usually used to accelerate both the training and inference processes of neural networks. This specification uses the acceleration of the training process via data parallelism as an example. Under the data parallelism approach, multiple training cards jointly train a same neural network. Each training card stores a complete copy of the neural network model. A training data set is divided into multiple data subsets, and each training card trains the neural network based on one of these data subsets. After obtaining first data based on the data subset, each training card needs to synchronize data with other training cards based on the first data, so that all these training cards update a model parameter of the neural network based on synchronized data. The training card may optionally be an integrated training card, or other types of compute devices such as compute cards may also be used for neural network training. In this specification, an example in which the training card trains the neural network is used for description.

The training process is usually divided into three phases: forward computation, backward computation, and gradient update. In the forward computation phase, each training card uses its own data subset to compute a loss value of the neural network. In the backward computation phase, each training card computes a gradient value based on the loss value obtained through forward computation of the training card, obtains a gradient value obtained through computation by another training card, and then obtains, based on the gradient value obtained through computation by the training card and the gradient value obtained through computation by the another training card, an update value used to update a model parameter. For example, after obtaining the gradient value obtained through computation by the training card and the gradient value obtained through computation by the another training card, the training card accumulates, one by one using an AllReduce operation, all gradient values obtained through computation, and then computes the average of the accumulated gradient values. The average is the update value for the model parameter. When multiple training cards jointly train the same neural network, each training card obtains an update value according to the logic. In this way, it can be ensured that update values obtained by all the training cards are the same. In the parameter update phase, each training card updates the model parameter by using the update value (for example, the averaged gradients).

Currently, data synchronization between training cards is implemented by using a communication operation, and a computation operation and a communication operation on each training card are performed in serial. For example, all computation operations and communication operations share a single computation stream, and all computation operations and all communication operations required for training are performed in serial.

However, total time spent on the computation operations and the communication operations is long, resulting in extended training time for neural networks. Similarly, this problem also exists in another scenario that requires data synchronization between multiple compute devices.

Therefore, an embodiment of this application provides a data synchronization method. The data synchronization method is applied to multiple compute devices. Each compute device includes a compute unit and a communication unit. Because the method relates to data exchange between the multiple compute devices, for ease of description, a first compute device and a second compute device are used as an example for description in this specification. The first compute device is any one of the multiple compute devices, and the second compute device is any one of the multiple compute devices except the first compute device. The first compute device includes a first compute unit and a first communication unit. The second compute device includes a second compute unit and a second communication unit. In this way, from the perspective of a single compute device, the compute device is a first compute device, and all compute devices in the multiple compute devices except the compute device are second compute devices. In this case, each compute device is a first compute device from the perspective of the compute device, and is a second compute device from the perspective of another compute device. Therefore, each of the multiple compute devices performs operations performed by the first compute device and the second compute device in the specification. From the perspective of interaction between compute devices, interaction between all compute devices in the multiple compute devices is performed in a manner of interaction between the first compute device and the second compute device.

In the method, the first compute unit transmits, before obtaining first data, a synchronization preparation request to the first communication unit, to indicate the first communication unit to perform a data synchronization operation based on the first data. Then, the first communication unit performs, based on the synchronization preparation request, a preparation operation needed for the data synchronization operation. The first compute unit transmits, after obtaining the first data, a synchronization initiation request to the first communication unit, to indicate the first communication unit to initiate the data synchronization operation. Then, the first communication unit sends a notification to the second communication unit based on the synchronization initiation request, to indicate, to the second communication unit, that the first communication unit is capable of performing the data synchronization operation. The first communication unit performs the data synchronization operation after all communication units in the multiple compute devices are capable of performing the data synchronization operation.

It can be learned that before the first communication unit performs the data synchronization operation, the first compute unit needs to obtain the first data needed for performing the data synchronization operation, and the first communication unit needs to perform the preparation operation needed for performing the data synchronization operation. The synchronization preparation request is sent before the first compute unit obtains the first data, the synchronization initiation request is sent after the first compute unit obtains the first data, and after obtaining the synchronization preparation request, the first communication unit performs the preparation operation needed for the data synchronization operation. In this way, a process of performing the preparation operation by the first communication unit and a process of obtaining the first data by the first compute unit can be performed in parallel, so that time needed for performing the preparation operation can at least partially overlap with time for the first compute unit to obtain the first data, thereby effectively reducing total time taken by the first compute unit to obtain the first data and the first communication unit to perform the preparation operation. In addition, after obtaining the synchronization initiation request, the first communication unit sends the notification to second communication units in multiple second compute devices, to indicate that the first communication unit is capable of performing the data synchronization operation, and after determining that all the communication units in the multiple compute devices are capable of performing the data synchronization operation, the first communication unit performs the data synchronization operation based on the first data. That is, a prerequisite for the communication units of all of the multiple compute devices to perform the data synchronization operation further includes: The communication units of all of the multiple compute devices are capable of performing the data synchronization operation. After the prerequisite is met, the communication units perform the data synchronization operation. In this way, it can be ensured that the data synchronization operation is performed only after the communication units of all of the multiple compute devices are in a state in which the data synchronization operation can be performed, to ensure that effective data synchronization can be performed between the communication units in the multiple compute devices, and ensure data synchronization efficiency. Therefore, according to the method, data synchronization efficiency can be ensured by reducing total time taken for data synchronization.

When used in a scenario in which a single neural network is trained by multiple training cards, the data synchronization method significantly boosts parallel model training efficiency between the multiple training cards. It reduces total time taken for data synchronization between the multiple training cards, thereby shorten training duration of the neural network. This optimizes the training duration of the neural network and ensures data synchronization efficiency among the multiple training cards. Similarly, applying the data synchronization method to another scenario that requires data synchronization between multiple compute devices can yield a similar effect.

In embodiments of this application, data synchronization refers to a process in which a portion of compute devices among multiple compute devices, when possessing target data that another compute device lacks, share the target data with the another compute device, so that all the multiple compute devices possess the target data. For example, when multiple training cards jointly train a same neural network, each training card trains the neural network based on a data subset in a training data set and obtains a gradient value corresponding to the data subset. However, updating a model parameter of the neural network requires a gradient value obtained based on the entire training data set. Therefore, a training card needs to provide another training card with a gradient value that it obtains through computation, and obtain, from the another training card, a gradient value obtained through computation by the another training card, so that each training card can obtain the gradient values obtained through computation based on the entire training data set. This process is a data synchronization process.

This specification describes the technical solutions of this application in detail from multiple perspectives such as an implementation scenario, a method procedure, a hardware apparatus, and a software apparatus.

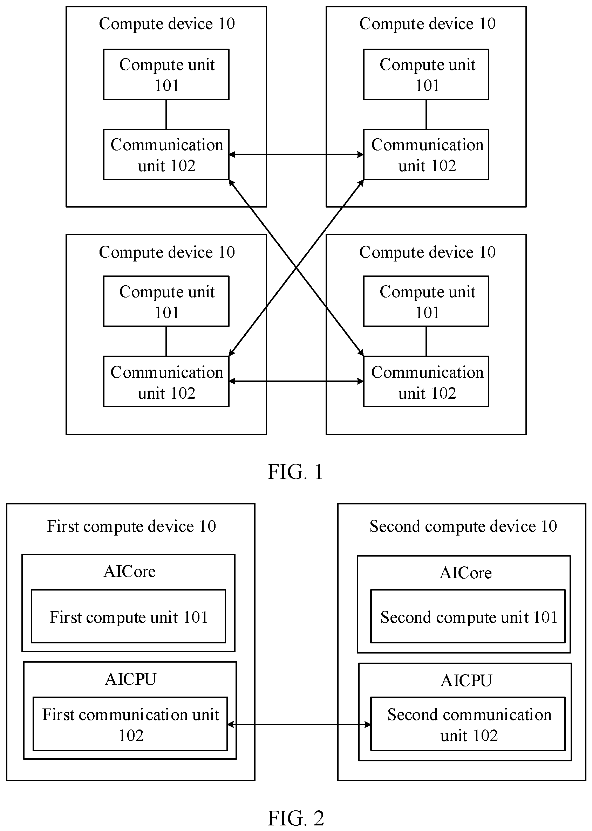

The following first describes the implementation scenario in embodiments of this application by using an example. FIG. 1 is a diagram of a structure of an implementation scenario related to a data synchronization method according to an embodiment of this application. As shown in FIG. 1, the implementation scenario includes multiple compute devices 10. Each compute device 10 includes a compute unit 101 and a communication unit 102. In a same compute device 10, a communication connection is established between the compute unit 101 and the communication unit 102. For example, the communication connection is established between the compute unit 101 and the communication unit 102 through a bus. A communication connection is also established between communication units 102 in different compute devices 10. For example, the communication connection is established between the communication units 102 in the different compute devices 10 through a network. Optionally, the network may be a local area network, the internet, or another network. This is not limited in embodiments of this application.

In an implementation, a function of the compute unit 101 in the data synchronization method provided in embodiments of this application may be optionally implemented by using software, hardware, firmware, or any combination thereof. For example, an executable program used to implement the function of the compute unit 101 in the data synchronization method is presented in a form of an application installation package. After the application installation package is installed on the compute device 10, the function of the compute unit 101 in the data synchronization method can be implemented by running the executable program.

Similarly, a function of the communication unit 102 in the data synchronization method provided in embodiments of this application may be optionally implemented by using software, hardware, firmware, or any combination thereof. For example, an executable program used to implement the function of the communication unit 102 in the data synchronization method is presented in a form of an application installation package. After the application installation package is installed on the compute device 10, the compute device 10 can implement the function of the communication unit 102 in the data synchronization method by running the executable program.

In embodiments of this application, the compute device 10 is any device that has both the compute unit 101 and the communication unit 102. For example, the compute device 10 is a training card, a computation card, a server, a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, an intelligent wearable device, or an intelligent vehicle-mounted device. When the compute device 10 is a training card, the training card may include a central processing unit (central processing unit, CPU), a graphics processing unit (graphics processing unit, GPU), a neural network processing unit (neural network processing unit, NPU), another artificial intelligence (artificial intelligence, AI) dedicated chip, or the like. For example, the training card includes an artificial intelligence core (artificial intelligence core, AICore) and an artificial intelligence central processing unit (artificial intelligence central processing unit, AICPU). The AICore is optionally a GPU, configured to implement the function of the compute unit 101. The AICPU is optionally a CPU, configured to implement the function of the communication unit 102. In addition, multiple training cards may be inserted into a same rack. When the compute device 10 is a server, the compute device 10 may be a server, a server cluster including several servers, or a cloud computing service center. A large quantity of basic resources of a cloud service provider are deployed in the cloud computing service center. For example, compute resources, storage resources, and network resources are deployed in the cloud computing service center. The cloud computing service center may use the large quantity of basic resources to implement the function of the compute device 10 in the data synchronization method provided in embodiment of this application.

For example, it is assumed that data synchronization is required between a first compute device 10 and multiple second compute devices 10. The first compute device 10 includes a first compute unit 101 and a first communication unit 102. The second compute device 10 includes a second compute unit 101 and a second communication unit 102. The first compute unit 101 is configured to obtain first data needed for a data synchronization operation, and transmit a synchronization preparation request and a synchronization initiation request to the first communication unit 102, where the synchronization preparation request is transmitted before the first data is obtained, and the synchronization initiation request is transmitted after the first data is obtained. The second compute unit 101 is configured to obtain second data needed for a data synchronization operation, and transmit a synchronization preparation request and a synchronization initiation request to the second communication unit 102, where the synchronization preparation request is transmitted before the second data is obtained, and the synchronization initiation request is transmitted after the second data is obtained. In addition, the first communication unit 102 is configured to: after obtaining the synchronization preparation request, perform, based on the synchronization preparation request, a preparation operation needed for the data synchronization operation, and after obtaining the synchronization initiation request, send a notification to the second communication unit 102, to notify the second communication unit 102 that the first communication unit 102 is capable of performing the data synchronization operation. The second communication unit 102 is configured to: after obtaining the synchronization preparation request, perform, based on the synchronization preparation request, a preparation operation needed for the data synchronization operation, and after obtaining the synchronization initiation request, send a notification to the first communication unit 102, to notify the first communication unit 102 that the second communication unit 102 is capable of performing the data synchronization operation. The first communication unit 102 and the second communication unit 102 separately perform the data synchronization operation after both the first communication unit 102 and the second communication unit 102 are capable of performing the data synchronization operation.

For example, the method may be applied to an AI computing scenario. For example, the method is applied to a scenario in which multiple training cards jointly train a same neural network. In this scenario, behaviors of all training cards are consistent. Each training card has a compute unit 101 and a communication unit 102. A data subset in a training data set is allocated to each training card, and each training card stores a complete copy of the neural network model. The compute unit 101 in each training card is configured to train the neural network based on the allocated data subset to obtain a gradient value. After obtaining a gradient value based on an allocated data subset, the compute unit 101 in any training card further needs to obtain a gradient value obtained by the compute unit 101 in another training card, obtain, based on the gradient value obtained through computation by the compute unit 101 in any training card and the gradient value obtained by the compute unit 101 in the another training card, an update value used to update a model parameter, and then perform a parameter update phase based on the update value. In this process, because the compute unit 101 in each training card needs to obtain the gradient value obtained by the compute unit 101 in the another training card, the compute unit 101 not only needs to provide the compute unit 101 in the another training card with the gradient value obtained through computation by the compute unit 101, but also needs to obtain the gradient value obtained through computation by the compute unit 101 in the another computation card. This process of providing the gradient value and obtaining the gradient value is a process of synchronizing the gradient values between multiple training cards. When the process of synchronizing the gradient values is implemented by using the data synchronization method provided in embodiments of this application, the compute unit 101 in each training card is configured to: before obtaining the gradient value based on the allocated data subset, transmit a synchronization preparation request to the communication unit 102 in the same training card; and after obtaining the gradient value, transmit a synchronization initiation request to the communication unit 102. The communication unit 102 in each training card is configured to: after obtaining the synchronization preparation request, perform, based on the synchronization preparation request, a preparation operation needed for synchronizing the gradient values; and after obtaining the synchronization initiation request, send a notification to the communication unit 102 in the another training card, to notify the communication unit 102 in the another training card that the communication unit 102 in the training card is capable of synchronizing the gradient values. Communication units 102 in the multiple training cards separately synchronize the gradient values after all the communication units 102 in the multiple training cards are capable of performing the data synchronization operation.

It should be noted that, although in the example, an example in which the data that needs to be synchronized is a computation result is used for description, it is not excluded that the data synchronization method can also be used to synchronize another type of data, and the data synchronization method can be used to synchronize all information represented by data. For example, the data synchronization method provided in embodiments of this application may be further applied to a scenario in which multiple compute devices 10 jointly provide a service whose quality of service (quality of service, QoS) needs to be guaranteed. In this scenario, the QoS of the service can be guaranteed from multiple dimensions, and the multiple dimensions affect each other. Each compute device 10 is responsible for a guarantee of one dimension. In a process of guaranteeing the QoS of the service, any compute device 10 needs to obtain an execution status of a dimension guaranteed by another compute device 10, and adjust a guarantee policy of the compute device 10 based on the execution status, so that the multiple compute devices 10 can cooperate to guarantee the QoS of the service. In this scenario, an object that needs to be synchronized is the execution status represented by data. The compute unit 101 in the compute device 10 guarantees working, and the communication unit 102 synchronizes the execution status between different compute devices 10. When there is a data synchronization requirement, the compute unit 101 transmits a synchronization preparation request to the communication unit 102 in the same compute device 10, then summarizes execution statuses that need to be synchronized, and transmits a synchronization initiation request to the communication unit 102 after obtaining the execution statuses. The communication unit 102 is configured to: after obtaining the synchronization preparation request, perform, based on the synchronization preparation request, a preparation operation needed for synchronizing the execution status; and after obtaining the synchronization initiation request, send a notification to the communication unit 102 in the another compute device 10, to notify the communication unit 102 in the another compute device 10 that the communication unit 102 is capable of synchronizing the execution status. Communication units 102 in the multiple compute devices 10 separately synchronize the execution status after all the communication units 102 in the multiple compute devices 10 are capable of performing the data synchronization operation.

Similarly, the data synchronization method provided in embodiments of this application may be further applied to another scenario that requires data synchronization between multiple compute devices 10. In addition, as a service requirement changes, a synchronized object may also change with an application scenario. This is not listed one by one in embodiments of this application.

Optionally, the compute device 10 may include at least one compute unit 101 and at least one communication unit 102. The compute unit 101 and the communication unit 102 in the same compute device 10 may be in a one-to-one correspondence, or may be in a many-to-one correspondence. When the compute unit 101 and the communication unit 102 are in a one-to-one correspondence, the communication unit 102 is configured to synchronize data for the compute unit 101 corresponding to the communication unit 102. When the compute unit 101 and the communication unit 102 are in a many-to-one correspondence, one communication unit 102 is configured to synchronize data for multiple compute units 101 corresponding to the communication unit 102.

In this application, a function of the compute unit 101 and a function of the communication unit 102 can be optionally enabled and disabled based on a requirement, and an occasion for enabling and disabling the function may be adjusted based on an application requirement. For example, because the compute unit 101 is mainly configured to perform a computation operation, the function of the compute unit 101 is optionally enabled when there is a computation requirement, and is disabled when there is no computation requirement. In this way, resource overheads can be reduced. The communication unit 102 is mainly configured to synchronize data for the compute unit 101. Therefore, when the compute unit 101 has a data synchronization requirement, it only needs to be ensured that the function of the communication unit 102 is in an enabled state. In an implementation, the function of the communication unit 102 is optionally enabled when the function of the compute unit 101 is enabled. For example, when the function of the compute unit 101 is enabled, the function of the communication unit 102 is enabled. In another implementation, the function of the communication unit 102 optionally remains in a normally enabled state. For example, when the compute unit 101 and the communication unit 102 are in a many-to-one correspondence, the function of the communication unit 102 optionally remains in a normally enabled state. In this way, when the function of any compute unit 101 corresponding to the communication unit 102 is in an enabled state, the communication unit 102 can synchronize data for the compute unit 101. In addition, because the enabled/disabled state does not need to be switched with function statuses of the multiple compute units 101, frequent switching of a function status of the communication unit 102 can be avoided.

In some implementation scenarios, when the function of the communication unit 102 remains in a normally enabled state, the function of the communication unit 102 is optionally provided in a service manner. When the compute unit 101 needs the communication unit 102 to synchronize data, the compute unit 101 may request, in a service request manner, the communication unit 102 to perform a data synchronization operation for the compute unit 101. For example, the compute unit 101 transmits a synchronization preparation request to the communication unit 102, which may be considered that the compute unit 101 requests a data synchronization service. The communication unit 102 performs, based on the synchronization preparation request, a preparation operation needed for the data synchronization operation, which may be considered that a communication service delivers, based on the synchronization preparation request, a task of performing the preparation operation for the data synchronization service. The compute unit 101 transmits a synchronization initiation request to the communication unit 102, which may be considered that the compute unit 101 notifies the communication unit 102 to start to provide the data synchronization service. The communication unit 102 performs the data synchronization operation based on the synchronization initiation request, which may be considered that the communication service provides the data synchronization service based on the synchronization initiation request. After the data synchronization is completed, a data synchronization service process is completed.

In addition, the function of the compute unit 101 and the function of the communication unit 102 are optionally implemented by using operators. In other words, the function of the compute unit 101 is implemented by using a computation operator, and the function of the communication unit 102 is implemented by using a communication operator. In this case, the function of the compute unit 101 and the function of the communication unit 102 can be enabled by starting a corresponding operator. A set of one or more operations performed on an operation object is referred to as an operator.

In this application, there are multiple presentation forms of the compute unit 101 and the communication unit 102. The following separately uses an example in which the compute unit 101 and the communication unit 102 are presented in a homogeneous mode and a heterogeneous mode for description.

In a first implementation, the compute unit 101 and the communication unit 102 are implemented in a heterogeneous mode. In this implementation, the compute device 10 includes different hardware that differs in hardware structures, and the compute unit 101 and the communication unit 102 are separately implemented by using different hardware. For example, the compute device 10 includes first hardware and second hardware, and the first hardware and the second hardware are different in hardware structures. The first hardware can implement the function of the compute unit 101 by running an executable program used to implement the function of the compute unit 101. The second hardware can implement the function of the communication unit 102 by running an executable program used to implement the function of the communication unit 102. Because hardware configured to implement the function of the compute unit 101 and hardware configured to implement the function of the communication unit 102 are different in hardware structures, it may be considered that the compute unit 101 and the communication unit 102 are implemented in the heterogeneous mode. For example, as shown in FIG. 2, the first hardware may be optionally an AICore, and the second hardware may be optionally an AICPU.

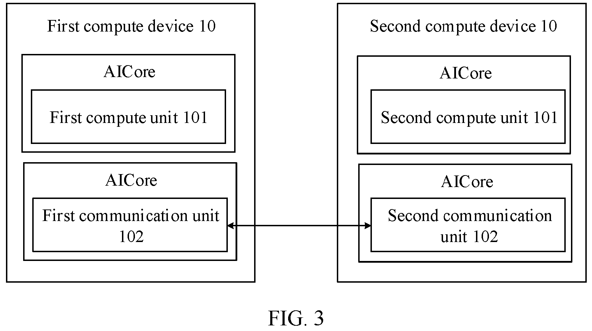

In a second implementation, the compute unit 101 and the communication unit 102 are implemented in a homogeneous mode. In this implementation, the function of the communication unit 102 and the function of the compute unit 101 can be implemented by using hardware having a same hardware structure. For example, when the compute device 10 has multiple pieces of first hardware, some first hardware can implement the function of the compute unit 101 by running an executable program used to implement the function of the compute unit 101, and some first hardware can implement the function of the communication unit 102 by running an executable program used to implement the function of the communication unit 102. Because in this implementation, hardware configured to implement the function of the compute unit 101 and hardware configured to implement the function of the communication unit 102 are the same in hardware structures, it may be considered that the compute unit 101 and the communication unit 102 are implemented in the homogeneous mode. For example, as shown in FIG. 3, the compute device 10 includes multiple AICores, some AICores are configured to implement the function of the compute unit 101, and the other AICores are configured to implement the function of the communication unit 102.

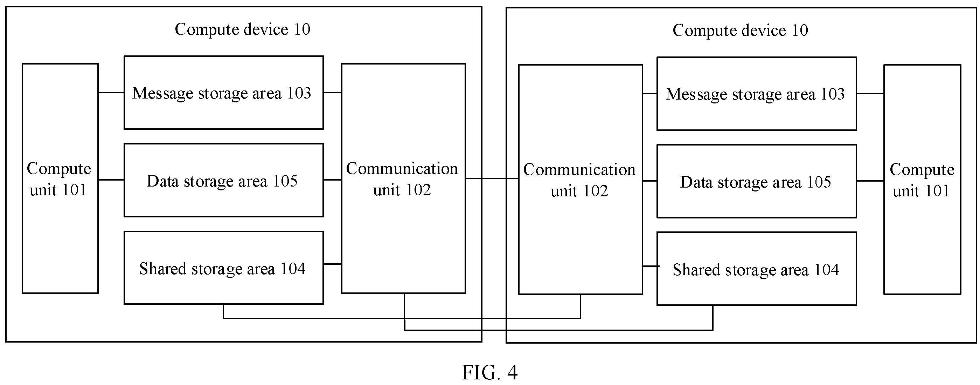

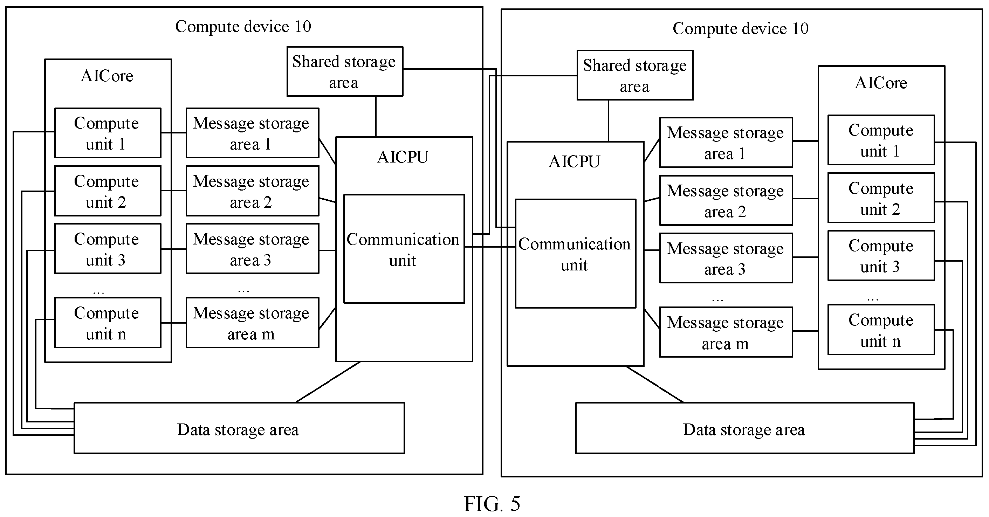

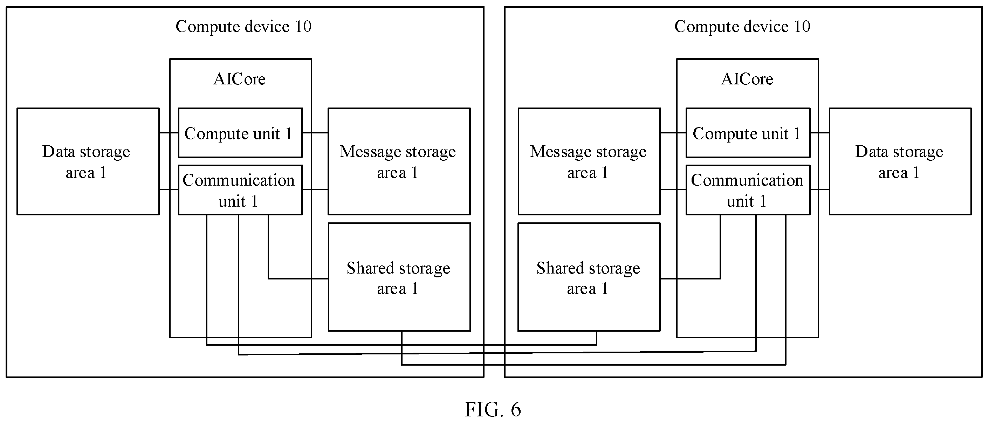

Optionally, as shown in FIG. 4, each compute device 10 further includes a message storage area 103. The message storage area 103 is configured to transmit a message between the compute unit 101 and the communication unit 102 in the same compute device 10. For example, the first compute unit 101 writes the synchronization preparation request to a first message storage area 103, and the first communication unit 102 reads the synchronization preparation request from the first message storage area 103, so that the synchronization preparation request can be transmitted from the first compute unit 101 to the first communication unit 102, and/or the first compute unit 101 writes the synchronization initiation request to the first message storage area 103, and the first communication unit 102 reads the synchronization initiation request from the first message storage area 103, so that the synchronization initiation request can be transmitted from the first compute unit 101 to the first communication unit 102. In an implementation, the message storage area 103 is a memory. When a message is transmitted between the compute unit 101 and the communication unit 102 through a message storage area 103, because the message storage area 103 has a function of recording the message, the compute unit 101 can continue to perform another operation (such as a computation operation) after writing a request to the message storage area 103, rather than waiting for the first communication unit 102 to respond to the message. Therefore, a process of continuing to perform the another operation by the compute unit 101 and a process of responding to the message by the communication unit 102 can be performed in parallel, so that total time taken by the process of continuing to perform the another operation by the compute unit 101 and the process of responding to the message by the communication unit 102 is shortened. A correspondence between the compute unit 101 and the message storage area 103, and a correspondence between the communication unit 102 and the message storage area 103 may be configured based on application requirements. For example, the compute unit 101 and the message storage area 103, and the communication unit 102 and the message storage area 103 are optionally in a one-to-one correspondence, a many-to-one correspondence, or a one-to-many correspondence. The message storage area 103 is configured to transmit a message for the corresponding compute unit 101. As shown in FIG. 5, each compute device includes n compute units, n message storage areas 103, and one communication unit. It can be learned that the compute unit and the message storage area 103 are in a one-to-one correspondence, and the communication unit and the message storage area 103 are in a many-to-one correspondence. As shown in FIG. 6, each compute device includes one compute unit, one message storage area 103, and one communication unit. It can be learned that the compute unit and the message storage area 103 are in a one-to-one correspondence, and the communication unit and the message storage area 103 are in a one-to-one correspondence.

Further, as shown in FIG. 4, each compute device 10 further includes a shared storage area 104. Communication units 102 in different compute devices 10 exchange data via the shared storage area 104. For example, the first compute device 10 further includes a first shared storage area 104. The second compute device 10 further includes a second shared storage area 104. After the first communication unit 102 stores first data in the first shared storage area 104, the second communication unit 102 can read the first data from the first shared storage area 104, to synchronize the first data to the second communication unit 102. Correspondingly, after the second communication unit 102 stores second data in the second shared storage area 104, the first communication unit 102 can read the second data from the second shared storage area 104, to synchronize the second data to the first communication unit 102. In an implementation, the shared storage area 104 is a memory. A correspondence between the communication units 102 and the shared storage area 104 may be configured based on an application requirement. For example, the communication unit 102 and the shared storage area 104 are optionally in a one-to-one correspondence, a one-to-many correspondence, or a many-to-one correspondence. The shared storage area 104 is configured to store, for the corresponding communication unit 102, data based on which the data synchronization operation is performed. The data based on which the data synchronization operation is performed refers to data that needs to be provided for a communication unit 102 in another compute device to perform the data synchronization operation. In addition, when one communication unit 102 corresponds to multiple shared storage areas 104, the communication unit 102 can synchronize data with the communication unit in the another compute device 10 via the multiple shared storage areas 104. When multiple communication units 102 correspond to one shared storage area 104, the multiple communication units 102 perform data synchronization through time division multiplexing on the shared storage area 104. As shown in FIG. 5, each compute device includes one shared storage area 104 and one communication unit. It can be learned that the communication unit and the shared storage area 104 are in a one-to-one correspondence. As shown in FIG. 6, each compute device includes one shared storage area 104 and one communication unit. It can be learned that the communication unit and the shared storage area 104 are also in a one-to-one correspondence. Because the shared storage area 104 is configured to provide data between communication units in different compute devices, the shared storage area 104 is also referred to as a window (win) area.

As shown in FIG. 4, each compute device 10 further includes a data storage area 105. Data that needs to be transmitted between the compute unit 101 and the communication unit 102 in the same compute device 10 may be transmitted via the data storage area 105. For example, after the compute unit 101 stores data in the data storage area 105, the communication unit 102 can obtain the data by reading the data from the data storage area 105, and perform data synchronization based on the data. Similarly, after obtaining data from another communication unit 102, the communication unit 102 may store synchronization data in the data storage area 105, and the compute unit 101 can obtain the synchronization data by reading the synchronization data from the data storage area 105. In addition, when the compute device 10 has multiple compute units 101, the compute device 10 has multiple data storage areas 105 respectively corresponding to the multiple compute units 101, or the multiple compute units 101 share one data storage area 105. In an implementation, the data storage area 105 is a memory. For example, the data storage area 105 may be a global memory (global memory, GM). As shown in FIG. 5, each compute device includes n compute units, one data storage area 105, and one communication unit. It can be learned that the compute unit and the data storage area 105 are in a many-to-one correspondence, and the communication unit and the data storage area 105 are in a one-to-one correspondence. As shown in FIG. 6, each compute device includes one compute unit, one data storage area 105, and one communication unit. It can be learned that the compute unit and the data storage area 105 are in a one-to-one correspondence, and the communication unit and the data storage area 105 are in a one-to-one correspondence.

It should be noted that when any two of the message storage area 103, the shared storage area 104, and the data storage area 105 are storage media having a same structure, the any two may be storage media that are independent of each other in physical structures, or may be different storage areas in a same storage medium. This is not specifically limited in embodiments of this application.

It should be understood that the foregoing content is an example description of an implementation scenario of the data synchronization method provided in embodiments of this application, and does not constitute a limitation on the implementation scenario of the data synchronization method. A person of ordinary skill in the art may learn that as a service requirement changes, the implementation scenario of the data synchronization method may be adjusted based on an application requirement. This is not enumerated in embodiments of this application.

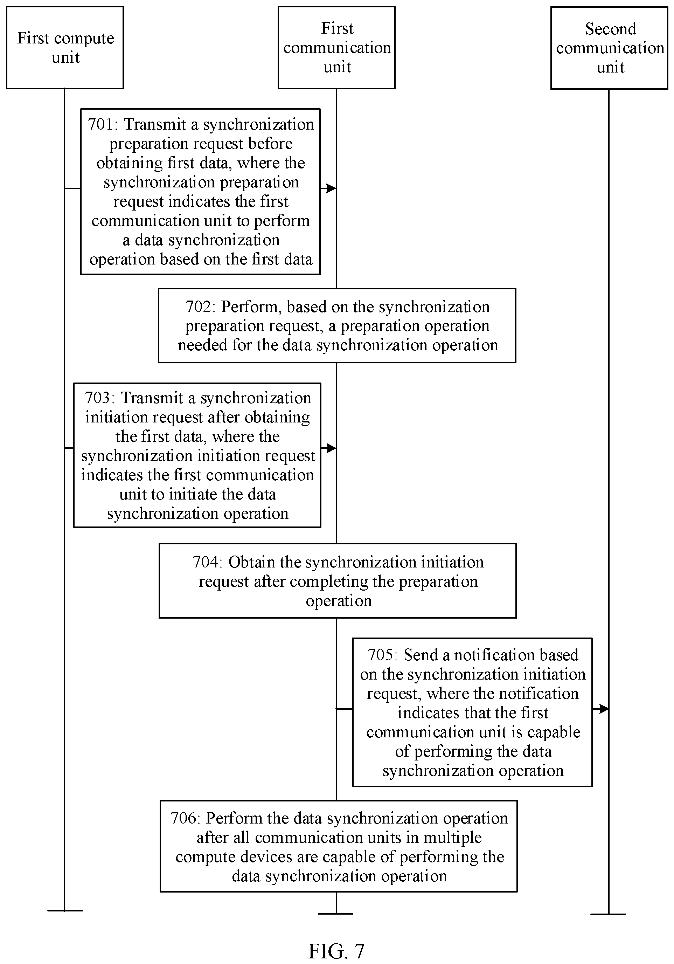

The following describes a data synchronization method provided in an embodiment of this application. As shown in FIG. 7, the data synchronization method includes the following steps.

Step 701: A first compute unit transmits, before obtaining first data, a synchronization preparation request to a first communication unit, where the synchronization preparation request indicates the first communication unit to perform a data synchronization operation based on the first data.

Optionally, the first compute unit directly transmits the synchronization preparation request to the first communication unit. For example, the first compute unit sends the synchronization preparation request to the first communication unit. Alternatively, the first compute unit indirectly transmits the synchronization preparation request to the first communication unit. For example, when the first compute device has a first message storage area, the first compute unit writes the synchronization preparation request to the first message storage area. After the first communication unit reads the synchronization preparation request from the first message storage area, the synchronization preparation request can be transmitted from the first compute unit to the first communication unit.

In an implementation of the synchronization preparation request, the synchronization preparation request carries a source storage address and a destination storage address. The source storage address is used to store the first data. The destination storage address is used to store first synchronization data. For example, both the source storage address and the destination storage address are addresses in a data storage area (for example, a memory). For example, when 10 training cards jointly train a neural network, a synchronization preparation request sent by a compute unit in any training card carries an address of a first buffer area (for example, an address of srcBuffer) and an address of a second buffer area (for example, an address of receiveBuffer) in the training card. The first buffer is configured to store first data. The second buffer is configured to store the first synchronization data. The source storage address is optionally represented by a start address and a length. The destination storage address is optionally represented by a start address or by a start address and a length (for example, bufferlen). For example, when lengths of synchronized data between multiple compute devices are consistent, a length of the first synchronization data can be determined based on a length of the first data, and the destination storage address is represented by the start address and the length. When the synchronization preparation request carries the source storage address and the destination storage address, regardless of a correspondence between a compute unit and a communication unit in a same compute device, for example, one-to-one or many-to-one, and regardless of a correspondence between a compute unit and a message storage area in the compute device, for example, one-to-one, many-to-one, or one-to-many, after obtaining a synchronization preparation request transmitted by any first compute unit, the first communication unit can determine, based on storage addresses carried in the synchronization preparation request, the storage addresses of first data and first synchronization data related to the synchronization preparation request, and perform data exchange with the first compute unit based on the addresses, without confusion with first data and first synchronization data related to another synchronization preparation request, to ensure correct transmission of data in a data synchronization operation process. It should be noted that the synchronization preparation request indicates to perform the data synchronization operation based on the first data. This does not mean that the synchronization preparation request carries the first data, but rather indicates the first data by carrying the source storage address, thereby indicating the execution of the data synchronization operation based on the first data.

Optionally, the synchronization preparation request further carries operation type information (optype). The operation type information indicates a manner in which the first communication unit obtains the first synchronization data based on the second data. The second data is data obtained from a second communication unit by the first communication unit by performing the data synchronization operation. For example, the operation type information indicates that the first synchronization data is the second data, a result of performing a specified operation on the second data, or a result of performing a specified operation on the second data and the first data. That is, the operation type information indicates specific data based on the first synchronization data is obtained, whether to perform the specified operation on the data to obtain the first synchronization data, and a type of the specified operation. In an implementation, the specified operation includes one or more of the following: a mathematical operation and a reordering operation. For example, the mathematical operation may be a mapping operation (Reduce or AllReduce), addition (Add), subtraction (Subtract), min (Min), max (Max), averaging (Average), or the like. Reduce maps data in multiple processes based on a specified mapping function and stores a mapping result in one process. AllReduce maps data in multiple processes based on a specified mapping function, and stores a mapping result in the multiple processes. The reordering operation may be a concatenation operation (Gather or AllGather), or the like. Gather concatenates data in multiple processes and stores a concatenation result in one process. AllGather concatenates data in multiple processes and stores a concatenation result in the multiple processes. An example in which 10 training cards train a neural network is used for description. After obtaining gradient values obtained by compute units in remaining nine training cards through computation, a communication unit in each training card may accumulate gradient values of the 10 training cards one by one using an AllReduce operation, then compute the average of the accumulated gradient values, and synchronize the average to a compute unit associated with the communication unit. The compute unit associated with the communication unit is a compute unit that provides a synchronization preparation request for the communication unit. It should be noted that the manner in which the first communication unit obtains the first synchronization data based on the second data is indicated by the first compute unit and is indicated by using the synchronization preparation request is merely an example. There may be another implementation. For example, the manner may be a default operation manner configured for the first communication unit. This is not specifically limited in this embodiment of this application.

Considering that the first compute unit needs to wait for specific duration before obtaining the first data after starting to obtain the first data, an occasion for the first compute unit to send the synchronization preparation request has at least the following three implementations.

In a first implementation, before starting to obtain the first data, the first compute unit sends the synchronization preparation request to the first communication unit. For example, the first compute unit first transmits the synchronization preparation request to the first communication unit, and then starts to obtain the first data. Optionally, transmitting the synchronization preparation request and obtaining the first data may be performed in serial.

In a second implementation, when starting to obtain the first data, the first compute unit transmits the synchronization preparation request to the first communication unit. For example, the first compute unit configures two parallel threads, one of the two threads is used to obtain the first data, the other thread is used to transmit the synchronization preparation request to the first communication unit, and the two threads start to be executed at the same time.

In a third implementation, the first compute unit transmits the synchronization preparation request to the first communication unit in an intermediate time period from starting to obtain the first data to obtaining the first data. For example, the first compute unit configures two parallel threads. One of the two threads is used to obtain the first data, and the other thread is used to transmit the synchronization preparation request to the first communication unit. After the thread for obtaining the first data starts to be executed, the first compute unit immediately executes the thread for transmitting the synchronization preparation request.

It should be noted that, before step 701 is performed, an initialization process needs to be completed first. For example, the initialization process includes: creating a communication domain including the multiple compute devices, configuring a message storage area and a data storage area in each compute device, and reserving a memory for implementing a shared storage area.

Step 702: The first communication unit performs, based on the synchronization preparation request, a preparation operation needed for the data synchronization operation.

After obtaining the synchronization preparation request, the first communication unit can determine that the compute unit has a data synchronization requirement. To perform the data synchronization operation, the first communication unit needs to first perform the preparation operation needed for the data synchronization operation. For example, the synchronization preparation request is a "prepare" notification. When the first compute unit has a data synchronization requirement, the first compute unit sends the "prepare" notification to the first communication unit. After obtaining the "prepare" notification, the first communication unit can determine that the first compute unit has the data synchronization requirement, and then perform the preparation operation needed for the data synchronization operation. In an implementation, performing the preparation operation includes: The first communication unit and the second communication unit negotiates a communication algorithm used for communication between them, and allocates a shared storage area in the first compute device and a second compute device, and the first communication unit and the second communication unit establish clock alignment. When the synchronization preparation request carries the source storage address of the first data, the first communication unit can determine a size of the first data based on the source storage address, and estimate, based on the first data, a size of a shared data area needed for performing the data synchronization operation, so that the first compute device allocates the shared data area in the first compute device based on the size. Similarly, the second communication unit may also allocate a shared data area in the second compute device in this manner. For example, assuming that the first communication unit can obtain a total quantity of compute devices that need to synchronize data, and sizes of data based on which communication units in multiple compute devices the perform data synchronization operation are the same, after determining the size of the first data, the first communication unit can obtain the size of the needed shared data area based on the size and the total quantity. For example, the size of the shared data area is equal to a product of the size of the first data and the total quantity.

Step 703: The first compute unit transmits, after obtaining the first data, a synchronization initiation request to the first communication unit, where the synchronization initiation request indicates the first communication unit to initiate the data synchronization operation.

Optionally, the first compute unit directly transmits the synchronization initiation request to the first communication unit. For example, the first compute unit sends the synchronization initiation request to the first communication unit. Alternatively, the first compute unit indirectly transmits the synchronization initiation request to the first communication unit. For example, when the first compute device has the first message storage area, the first compute unit writes the synchronization initiation request to the first message storage area. After the first communication unit reads the synchronization initiation request from the first message storage area, the synchronization initiation request can be transmitted from the first compute unit to the first communication unit.

It can be learned from the foregoing content that, the first communication unit needs to respond to the synchronization preparation request and the synchronization initiation request that are paired to perform the data synchronization operation. Therefore, the synchronization initiation request and the synchronization preparation request optionally carry information indicating that the two are the synchronization initiation request and the synchronization preparation request that are paired. For example, the synchronization initiation request carries association information, and the association information indicates the synchronization preparation request paired with the synchronization initiation request. For example, the synchronization preparation request carries a request number, and the association information in the synchronization initiation request indicates that the synchronization initiation request is paired with the synchronization preparation request identified by the request number. For another example, both the synchronization preparation request and the synchronization initiation request carry a source storage address, and the synchronization preparation request and the synchronization initiation request that carry the same source storage address are paired. The synchronization preparation request and the synchronization initiation request that are paired indicate a same data synchronization operation.

Step 704: The first communication unit obtains the synchronization initiation request after completing the preparation operation.

In this application, there may be at least the following two execution sequences of performing the preparation operation and obtaining the synchronization initiation request by the first communication unit. In a first execution sequence, the first communication unit scans for the synchronization initiation request after completing the preparation operation, and obtains the synchronization initiation request once it is found. In a second execution sequence, the first communication unit scans for the synchronization initiation request while performing the preparation operation, and obtains the synchronization initiation request once it is found. In the first execution sequence, in the process of performing the preparation operation, the first communication unit does not need to scan for the synchronization initiation request, so that more resources can be used to perform the preparation operation, thereby ensuring efficiency of performing the preparation operation. In the second execution sequence, the first communication unit further needs to scan for the synchronization initiation request during performing the preparation operation. The operation of scanning the synchronization initiation request affects efficiency of performing the preparation operation, and increases overheads. In addition, because the synchronization preparation request is sent before the synchronization initiation request, scanning for the synchronization initiation request after the preparation operation is completed simplifies the logic by which the first communication unit consumes requests, making it easier to implement. The first communication unit optionally periodically scans for the synchronization initiation request. For example, when the first compute unit transmits the request to the second communication unit via the message storage area, the first communication unit periodically scans the message storage area, and obtains the request from the message storage area when the new request is found through scanning in the message storage area.

Step 705: The first communication unit sends a notification to the second communication unit based on the synchronization initiation request, where the notification indicates that the first communication unit is capable of performing the data synchronization operation.

After obtaining the synchronization initiation request, to ensure that the communication units in the multiple compute devices can perform effective data synchronization, the first communication unit needs to send a notification to each second communication unit, to notify that the first communication unit is in a state in which the data synchronization operation can be performed. In this way, the second communication unit determines whether the communication units in all the compute devices are in the state in which the data synchronization operation can be performed, and determines, based on a determining result, whether to perform the data synchronization operation. For example, after obtaining the synchronization initiation request, the first communication unit may learn that the first compute unit has completed preparation work for the first data, and the first communication unit determines that the first communication unit is capable of performing the data synchronization operation. For example, the synchronization initiation request is a "work" notification. After obtaining the first data, the first compute unit sends the "work" notification to the first communication unit. After the first communication unit obtains the "work" notification, the first communication unit determines that the first communication unit is capable of performing the data synchronization operation, and then sends a "ready" notification to the second communication unit, to notify the second communication unit that the first communication unit is capable of performing the data synchronization operation.

When the first communication unit is in the state in which the data synchronization operation can be performed, the first communication unit needs to meet at least two conditions. A first condition is that the first compute unit has completed preparation work for the first data, and a second condition is that the first communication unit has completed the preparation operation needed for performing the data synchronization operation. After completing preparation work for the first data, the first compute unit sends the synchronization initiation request to the first communication unit. After receiving the synchronization initiation request, the first communication unit can determine that the first compute unit has completed preparation work for the first data. That the first compute unit completes preparation work for the first data mainly includes: The first compute unit obtains the first data, and the first data has been stored in the source storage address. In most scenarios, for example, in a scenario in which the first compute unit obtains the first data by using a computation operation, because duration consumed for storing the first data in the source storage address can be ignored when compared with duration for performing the computation operation by the first compute unit, the first condition may be considered as that the first compute unit obtains the first data.

Optionally, considering that the multiple compute devices may execute multiple data synchronization processes in a same time period, to ensure that the communication unit can identify any notification that belongs to a same data synchronization process, the notification optionally carries information identifying the data synchronization process. Data synchronized in the same data synchronization process is correlated data. For example, when multiple training cards train a neural network, data synchronized in a same data synchronization process is a gradient values obtained through computation by each training card based on an allocated data subset in a same iteration process.

Step 706: The first communication unit performs the data synchronization operation after all communication units in the multiple compute devices are capable of performing the data synchronization operation.

Before performing the data synchronization operation, the first communication unit needs to determine whether all the communication units in the multiple compute devices are capable of performing the data synchronization operation. When the first communication unit has obtained the synchronization initiation request transmitted by the first compute unit, and all second communication units in the multiple compute devices are capable of performing the data synchronization operation, the first communication unit determines that all the communication units in the multiple compute devices are capable of performing the data synchronization operation. In an implementation, because the first communication unit needs to send a notification to each second communication unit after obtaining the synchronization initiation request, the first communication unit also receives a notification sent by the second communication unit, and counts the received notification. For example, a count is increased by one each time one notification is received, and when a total quantity of received notifications is equal to a total quantity of second communication units that need to perform data synchronization, it is determined that all second communication units in the multiple compute devices are capable of performing the data synchronization operation. When the notification carries the information identifying the data synchronization process, the first communication unit optionally counts each data synchronization process separately. Each time one notification is received, the first communication unit first obtains the information identifying the data synchronization process, and then adds one to a count for the data synchronization process indicated by the information. When a total quantity in any data synchronization process is equal to a total quantity of second communication units participating in the data synchronization process, it is determined that all the second communication units participating in the data synchronization process are capable of performing the data synchronization operation.

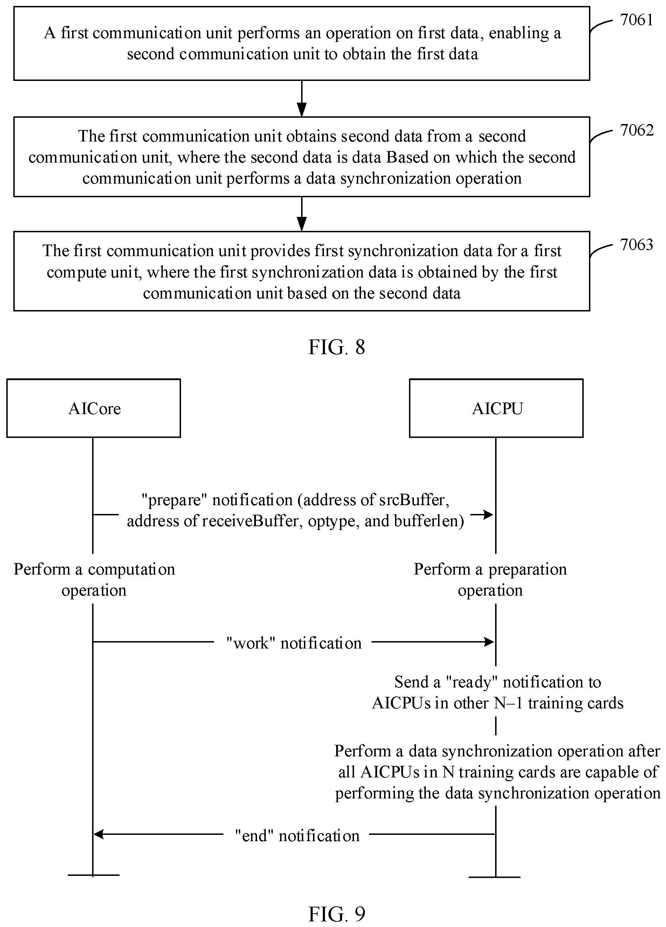

It can be learned from the foregoing descriptions that, when performing the data synchronization operation, the first communication unit not only needs to provide data for the second communication unit, but also needs to obtain data from the second communication unit, and provides first synchronization data for the first compute unit based on the obtained data. For example, when 10 training cards train a neural network, a communication unit in any training card needs to provide a communication unit in another training card with a gradient value obtained through computation by a compute unit in the training card, further needs to obtain gradient values obtained through computation by compute units in remaining nine training cards, and then provide first synchronization data for the first compute unit based on gradient values obtained through computation by compute units in the 10 training cards. In an implementation, as shown in FIG. 8, a process in which the first communication unit performs the data synchronization operation includes the following steps.

Step 7061: The first communication unit performs an operation on the first data, enabling the second communication unit to obtain the first data.

When the synchronization preparation request carries the source storage address of the first data, a process in which the first communication unit performs step 7061 includes: The communication unit obtains the first data from the source storage address, and performs an operation on the first data, enabling the second communication unit to obtain the first data. In an implementation, when the first compute device includes a first shared storage area, because both the first communication unit and the second communication unit are capable of reading data stored in the first shared storage area, that the first communication unit performs the operation on the first data, enabling at least one second communication unit to obtain the first data includes: The first communication unit stores the first data in the first shared storage area, enabling the at least one second communication unit to read the first data from the first shared storage area. Alternatively, the first communication unit optionally uses another manner to enable the second communication unit to obtain the first data. For example, the first communication unit broadcasts the first data to the second communication unit. This is not specifically limited in this embodiment of this application.

Optionally, that the first communication unit performs the operation on the first data may further include: adding the information identifying the data synchronization process to the first data, so that the second communication unit identifies synchronized data belonging to the same data synchronization process, to ensure that needed data can be synchronized, and/or the first communication unit may further add identification information of the first communication unit to the first data, so that the second communication unit determines, based on the identification information, that the first data is data that the first communication unit needs to synchronize. It should be noted that, if there is another solution that can ensure the foregoing identification result, the first communication unit may not add corresponding information to the first data. For example, if a communication unit in a compute device in a same time period is allowed to participate in only one data synchronization process, when the second communication unit performs data synchronization with the first communication unit, it can be ensured that data obtained by the second communication unit from the shared storage area corresponding to the first communication unit is data synchronized by the first communication unit to the second communication unit. In this case, there is no need to add information for ensuring the identification result to the first data.

Step 7062: The first communication unit obtains second data from the second communication unit, where the second data is data based on which the second communication unit performs the data synchronization operation.

When the second compute device includes a second shared storage area, because both the first communication unit and the second communication unit are capable of reading data stored in the second shared storage area, that the first communication unit obtains the second data from the second communication unit includes: The first communication unit reads the second data from the second shared storage area associated with the second communication unit. The second shared storage area associated with the second communication unit is a shared storage area to which the second communication unit writes the second data. For example, when three training cards train a neural network, a training card 1 includes a communication unit 1 and a shared storage area 1, a training card 2 includes a communication unit 2 and a shared storage area 2, a training card 3 includes a communication unit 3 and a shared storage area 3, and data synchronization needs to be performed among the communication unit 1, the communication unit 2, and the communication unit 3. In this case, the communication unit 1 writes, to the shared storage area 1, data 1 that needs to be provided for the communication units 2 and 3, the communication unit 2 writes, to the shared storage area 2, data 2 that needs to be provided for the communication units 1 and 3, and the communication unit 3 writes, to the shared storage area 3, data 3 that needs to be provided for the communication units 1 and 2. The communication unit 1 needs to read the data 2 from the shared storage area 2, and read the data 3 from the shared storage area 3. The communication unit 2 needs to read the data 1 from the shared storage area 1, and read the data 3 from the shared storage area 3. The communication unit 3 needs to read the data 2 from the shared storage area 2, and read the data 1 from the shared storage area 1.

Step 7063: The first communication unit provides first synchronization data for the first compute unit, where the first synchronization data is obtained by the first communication unit based on the second data.

After obtaining the second data, the first communication unit can provide the first synchronization data for the first compute unit based on the second data. The first synchronization data is obtained based on the second data. The first compute unit may indicate, to the first communication unit, a manner of obtaining the first synchronization data based on the second data. For example, the synchronization preparation request carries operation type information, and the operation type information indicates the manner. After obtaining the second data, the first communication unit may obtain the first synchronization data based on the second data in the manner indicated by the operation type information. For example, when the operation type information indicates that the first synchronization data is the second data, the first communication unit may provide the second data for the first compute unit. When the operation type information indicates that the first synchronization data is a result of performing a specified operation on the second data, the first communication unit may perform the specified operation on the second data to obtain the first synchronization data, and provide the first synchronization data for the first compute unit. When the operation type information indicates that the first synchronization data is a result of performing a specified operation on the second data and the first data, the first communication unit may perform the specified operation on the second data and the first data to obtain the first synchronization data, and provide the first synchronization data for the first compute unit.

When the synchronization preparation request carries a destination storage address of the first synchronization data, that the first communication unit provides the first synchronization data for the first compute unit includes: The first communication unit stores the first synchronization data in the destination storage address, so that the first compute unit obtains the first synchronization data from the destination storage address.

The following describes an example of an implementation process of the data synchronization method by using an example in which multiple training cards jointly train a same neural network. It is assumed that the data synchronization method is used to synchronize gradients obtained through computation by compute units in N training cards, where N is a positive integer. The compute unit is an AICore in the training card, and the communication unit is an AICPU in the training card. A function of the communication unit is presented as a data synchronization service. The AICore and AICPU jointly implement data synchronization in the following phases:

First phase: Initialization phase. The first phase includes the following step.
1: After all the N training cards are started, the N training cards jointly create a communication domain including the N training cards, a message storage area and a data storage area are configured in each training card, a memory for implementing a shared storage area is reserved, and the like.

Second phase: The AICPU performs a preparation operation for the data synchronization service. As shown in FIG. 9, the second phase includes the following steps.
1: Before obtaining a gradient through computation based on an allocated data subset, the AICore writes a "prepare" notification to a message storage area in the training card. When finding, through scanning, that there is a new message in the message storage area in the training card, the AICPU obtains the "prepare" notification from the message storage area. The "prepare" notification carries an address of srcBuffer, an address of receiveBuffer, optype, and bufferlen, where srcBuffer is configured to store the gradient computed this time, and receiveBuffer is configured to store first synchronization data obtained based on the gradients obtained through computation by the N training cards. In this case, it may be considered that the AICore requests the data synchronization service from the AICPU by using the "prepare" notification.
2: After obtaining the "prepare" notification, the AICPU performs a preparation operation needed for a data synchronization operation. For example, the AICPU negotiates a communication algorithm with an AICPU in another training card, allocates a shared storage area in the training card, and aligns a clock with AICPUs in other N-1 training cards. In addition, the AICore performs a computation operation based on the allocated data subset to obtain the gradient.

Third phase: The AICPU provides the data synchronization service. As shown in FIG. 9, the second phase includes the following steps.
1: After completing the preparation operation, the AICPU continues to scan a message in the message storage area in the training card, to wait for a message from the AICore.
2: After obtaining the gradient through computation based on the allocated data subset, the AICore writes a "work" notification to the message storage area in the training card. When finding, through scanning, that there is a new message in the message storage area in the training card, the AICPU obtains the "work" notification from the message storage area. In this case, it may be considered that the AICore indicates, by using the "work" notification, the AICPU to start to provide the data synchronization service.
3: After obtaining the "work" notification, the AICPU sends a "ready" notification to the AICPUs in the other N-1 training cards, where the notification indicates that the AICPU in the current training card is capable of performing the data synchronization operation.
4: The AICPU performs the data synchronization operation after determining that all the AICPUs in the N training cards are capable of performing the data synchronization operation. For example, the gradient obtained through computation by the AICore is obtained from the data storage area based on the address of srcBuffer and bufferlen, the gradient is stored in the shared storage area of the current training card, and the gradients are obtained from the shared storage areas in the other N-1 training cards. Then, the first synchronization data is obtained based on all the obtained gradients in a manner indicated by optype, and the first synchronization data is stored in the address of receiveBuffer, so that the AICore obtains the first synchronization data from the address of receiveBuffer.
5: After storing the first synchronization data in the address of receiveBuffer, the AICPU sends an "end" notification to the AICore in the training card, to notify the AICore to exit. After all AICores in the N training cards exit, all the AICPUs in the N training cards exit, and a communication service ends.

It should be noted that a sequence of steps in the data synchronization method provided in embodiments of this application may be appropriately adjusted, and a step may be correspondingly added or deleted based on a situation. Any variation method readily figured out by a person skilled in the art within the technical scope disclosed in this application shall fall within the protection scope of this application. Therefore, details are not described herein.

The following describes a compute device in embodiments of this application by using an example.

The foregoing describes the data synchronization method in embodiments of this application. Corresponding to the foregoing method, embodiments of this application further provide a compute device configured to implement the data synchronization method. For a diagram of the compute device, refer to FIG. 1 to FIG. 6. Based on the following multiple components shown in FIG. 1 to FIG. 6, the compute device shown in FIG. 1 to FIG. 6 can perform all or some of the operations shown in FIG. 7. It should be understood that, a system may include more additional components than the components shown, or a part of the components shown are omitted. This is not limited in embodiments of this application. The following uses an example in which the compute device is a first compute device for description. As shown in FIG. 1 to FIG. 3, the first compute device 10 may include a first compute unit 101 and a first communication unit 102.

The first compute unit 101 is configured to transmit, before obtaining first data, a synchronization preparation request to the first communication unit 102, where the synchronization preparation request indicates the first communication unit 102 to perform a data synchronization operation based on the first data.

The first communication unit 102 is configured to perform, based on the synchronization preparation request, a preparation operation needed for the data synchronization operation.

The first compute unit 101 is further configured to transmit, after obtaining the first data, a synchronization initiation request to the first communication unit 102, where the synchronization initiation request indicates the first communication unit 102 to initiate the data synchronization operation.

The first communication unit 102 is further configured to send, based on the synchronization initiation request, a notification to a second communication unit 102, where the notification indicates that the first communication unit 102 is capable of performing the data synchronization operation, the second communication unit 102 belongs to a second compute device 10, and data synchronization needs to be performed between the second compute device 10 and the first compute device 10.

The first communication unit 102 is further configured to perform the data synchronization operation after all communication units 102 in multiple compute devices 10 that need to perform data synchronization with the first compute device 10 are capable of performing the data synchronization operation.

Optionally, the first communication unit 102 is further configured to obtain the synchronization initiation request after completing the preparation operation.

Optionally, as shown in FIG. 4 to FIG. 6, the first compute device 10 further includes a first message storage area 103. The first compute unit 101 is specifically configured to write the synchronization preparation request to the first message storage area 103, and the first communication unit 102 reads the synchronization preparation request from the first message storage area 103, and/or the first compute unit 101 is specifically configured to write the synchronization initiation request to the first message storage area 103, and the first communication unit 102 reads the synchronization initiation request from the first message storage area 103.

Optionally, that the first communication unit 102 performs the data synchronization operation specifically includes: performing an operation on the first data, enabling the second communication unit 102 to obtain the first data; obtaining second data from the second communication unit 102, where the second data is data based on which the second communication unit 102 performs the data synchronization operation; and providing first synchronization data for the first compute unit 101, where the first synchronization data is obtained by the first communication unit 102 based on the second data.

Optionally, the first communication unit 102 is further configured to perform a specified operation based on the second data to obtain the first synchronization data.

Optionally, the first communication unit 102 is further configured to perform a specified operation based on the first data and the second data to obtain the first synchronization data.

Optionally, the specified operation is indicated by the first compute unit 101.

Optionally, the specified operation includes one or more of the following: a mathematical operation and a reordering operation.

Optionally, the synchronization preparation request carries a destination storage address used to store the first synchronization data. The first communication unit 102 is specifically configured to store the first synchronization data in the destination storage address, so that the first compute unit 101 obtains the first synchronization data from the destination storage address.

Optionally, the synchronization preparation request carries a source storage address used to store the first data. The first communication unit 102 is further configured to obtain the first data from the source storage address.

Optionally, as shown in FIG. 4 to FIG. 6, the first compute device 10 further includes a first shared storage area 104, and both the first communication unit 102 and the second communication unit 102 are capable of reading data stored in the first shared storage area 104. The first communication unit 102 is specifically configured to store the first data in the first shared storage area 104, enabling the second communication unit 102 to read the first data from the first shared storage area 104.

Optionally, as shown in FIG. 4 to FIG. 6, the second compute device 10 further includes a second shared storage area 104, and both the first communication unit 102 and the second communication unit 102 are capable of reading data stored in the second shared storage area 104. The first communication unit 102 is specifically configured to read second data from the second shared storage area 104 associated with the second communication unit 102, where the second shared storage area 104 associated with the second communication unit 102 is a shared storage area 104 to which the second communication unit 102 writes the second data.

Optionally, the first communication unit 102 is further configured to obtain the synchronization initiation request transmitted by the first compute unit 101; and the first communication unit 102 is further configured to determine that the second communication unit 102 is capable of performing the data synchronization operation.

Herein, for a detailed working process of the first compute unit 101, the first communication unit 102, the message storage area 103, and the shared storage area 104, and an effect that can be achieved, refer to the foregoing related descriptions. For example, the first compute unit 101 transmits the synchronization preparation request to the first communication unit 102 in the manner described in step 701, and transmits the synchronization initiation request to the first communication unit 102 in the manner described in step 703. The first communication unit 102 performs, in the manner described in step 702, the preparation operation needed for the data synchronization operation, and performs the data synchronization operation in the manner described in step 705 and step 706. Details are not described herein again in this embodiment of this application.

The following describes a basic hardware structure in embodiments of this application by using an example.

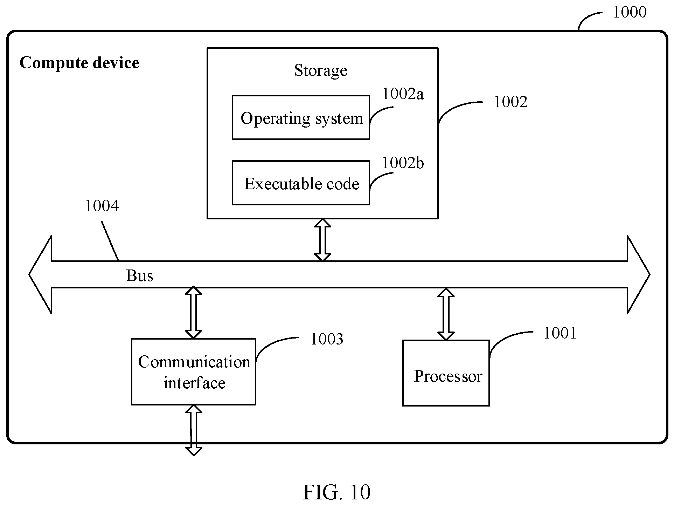

An embodiment of this application provides a compute device. The compute device is configured to implement some or all of functions of the data synchronization method provided in embodiments of this application, FIG. 10 is a diagram of a structure of a compute device according to an embodiment of this application. As shown in FIG. 10, the compute device 1000 includes a processor 1001, a storage 1002, a communication interface 1003, and a bus 1004. Communication connections between the processor 1001, the storage 1002, and the communication interface 1003 are implemented through the bus 1004.

The processor 1001 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 1001 may alternatively be an integrated circuit chip and has a signal processing capability. In an implementation process, some or all of functions of the data synchronization method in this application may be implemented by using an integrated logic circuit of hardware in the processor 1001 or instructions in a form of software. For example, the compute unit and the communication unit may be separately implemented by using the processor 1001.

The storage 1002 is configured to store a computer program, and the computer program includes an operating system 1002a and executable code (namely, program instructions) 1002b. For example, the storage 1002 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the storage 1002 is configured to store an egress queue. For example, the storage 1002 exists independently, and is connected to the processor 1001 through the bus 1004. Alternatively, the storage 1002 and the processor 1001 are integrated together. The storage 1002 may store executable code. When the executable code stored in the storage 1002 is executed by the processor 1001, the processor 1001 is configured to perform some or all of functions of the data synchronization method provided in embodiments of this application. For an implementation of performing the process by the processor 1001, correspondingly refer to related descriptions in the foregoing embodiments. The storage 1002 may further include a software module, data, and the like that are required by another running process such as an operating system. For example, the message storage area, the shared storage area, and the data storage area may be separately implemented by using the storage 1002.

The communication interface 1003 uses a transceiver module, for example, but not limited to a transceiver, to implement communication with another device or a communication network. For example, the communication interface 1003 may be any one or any combination of the following components having a network access function: a network interface (for example, an Ethernet interface), a wireless network interface card, and the like.

The bus 1004 is any type of communication bus configured to implement interconnection between internal components (for example, the storage 1002, the processor 1001, and the communication interface 1003) in the compute device, for example, a system bus. In this embodiment of this application, an example in which the foregoing components in the compute device are interconnected through the bus 1004 is used for description. Optionally, the foregoing components in the compute device 1000 may be communicatively connected to each other in another connection manner other than through the bus 1004. For example, the foregoing components in the compute device 1000 are interconnected through an internal logical interface.

It should be noted that the foregoing multiple components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is used to implement embodiments, all or some of embodiments may be implemented in a form of a computer program product. The computer program product that provides a program development platform includes one or more computer instructions. When these computer program instructions are loaded and executed on a compute device, all or some of functions of the data synchronization method provided in embodiments of this application are implemented.

In addition, the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a compute device cluster. The compute device cluster includes at least one compute device. In some embodiments, the compute device may alternatively be a terminal device like a desktop computer, a notebook computer, or a smartphone.

Optionally, for a structure of the at least one compute device included in the compute device cluster, refer to the compute device 1000 shown in FIG. 10. A storage 1002 in one or more compute devices 1000 in the compute device cluster may store same instructions for performing a data synchronization method.

Alternatively, in some possible implementations, the storage 1002 in the one or more compute devices 1000 in the compute device cluster may separately store some instructions for performing the data synchronization method. In other words, a combination of the one or more compute devices 1000 may jointly execute the instructions for performing the data synchronization method.

It should be noted that storages 1002 in different compute devices 1000 in the compute device cluster may store different instructions, and are respectively used to perform functions of different compute devices in the data synchronization method provided in embodiments of this application. In other words, instructions stored in the storages 1002 in the different compute devices 1000 may implement functions of a first compute device and a second compute device.

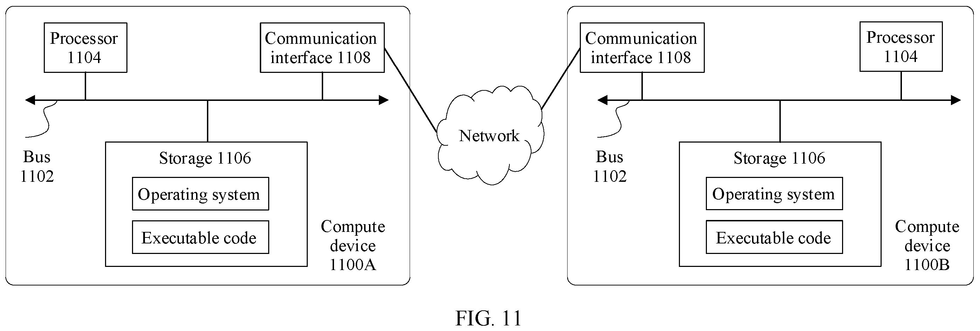

In some possible implementations, the one or more compute devices in the compute device cluster may be connected through a network. The network may be a wide area network, a local area network, or the like. FIG. 11 shows a possible implementation. As shown in FIG. 11, two compute devices 1100A and 1100B are connected through a network. Specifically, each compute device is connected to the network through a communication interface in the compute device. In this possible implementation, the compute devices 1100A and 1100B include buses 1102, processors 1104, storages 1106, and communication interfaces 1108. The storage 1106 in the compute device 1100A stores instructions for performing functions of a first compute unit and a first communication unit. In addition, the storage 1106 in the compute device 1100B stores instructions for performing functions of a second compute unit and a second communication unit.

It should be understood that functions of the compute device 1100A shown in FIG. 11 may alternatively be completed by multiple compute devices 1100. Similarly, functions of the compute device 1100B may alternatively be completed by multiple compute devices 1100. In addition, a deployment manner of the modules configured to implement the data synchronization method in the compute device may alternatively be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a compute device, the compute device is enabled to implement the data synchronization method provided in embodiments of this application.

An embodiment of this application further provides a computer program product including instructions. When the computer program product runs on a computer, the computer is enabled to implement the data synchronization method provided in embodiments of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, original data, executable code, and the like in this application are obtained under full authorization.

In embodiments of this application, the terms "first", "second", and "third" are merely used for description, but shall not be understood as an indication or implication of relative importance. The term "at least one" means one or more, and the term "multiple" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A data synchronization method, wherein the method is applied to multiple compute devices, and the method comprises:
transmitting, by a first compute unit before obtaining first data, a synchronization preparation request to a first communication unit, wherein the synchronization preparation request indicates the first communication unit to perform a data synchronization operation based on the first data, a first compute device comprises the first compute unit and the first communication unit, and the first compute device is any one of the multiple compute devices;
performing, by the first communication unit based on the synchronization preparation request, a preparation operation needed for the data synchronization operation;
transmitting, by the first compute unit after obtaining the first data, a synchronization initiation request to the first communication unit, wherein the synchronization initiation request indicates the first communication unit to initiate the data synchronization operation;
sending, by the first communication unit, a notification to a second communication unit based on the synchronization initiation request, wherein the notification indicates that the first communication unit is capable of performing the data synchronization operation, a second compute device comprises a second compute unit and the second communication unit, and the second compute device is any one of the multiple compute devices except the first compute device; and
performing, by the first communication unit, the data synchronization operation after all communication units in the multiple compute devices are capable of performing the data synchronization operation.

2. The method according to claim 1, wherein before the sending, by the first communication unit, the notification to the second communication unit based on the synchronization initiation request, the method further comprises:
obtaining, by the first communication unit, the synchronization initiation request after completing the preparation operation.

3. The method according to claim 1 or 2, wherein the first compute device further comprises a first message storage area; and
the transmitting, by the first compute unit, the synchronization preparation request to the first communication unit comprises:
writing, by the first compute unit, the synchronization preparation request to the first message storage area, and reading, by the first communication unit, the synchronization preparation request from the first message storage area; and/or
the transmitting, by the first compute unit, the synchronization initiation request to the first communication unit comprises:
writing, by the first compute unit, the synchronization initiation request to the first message storage area, and reading, by the first communication unit, the synchronization initiation request from the first message storage area.

4. The method according to any one of claims 1 to 3, wherein the performing, by the first communication unit, the data synchronization operation comprises:
performing, by the first communication unit, an operation on the first data, enabling the second communication unit to obtain the first data;
obtaining, by the first communication unit, second data from the second communication unit, wherein the second data is data based on which the second communication unit performs the data synchronization operation; and
providing, by the first communication unit, first synchronization data for the first compute unit, wherein the first synchronization data is obtained by the first communication unit based on the second data.

5. The method according to claim 4, wherein the method further comprises:
performing, by the first communication unit, a specified operation based on the second data to obtain the first synchronization data.

6. The method according to claim 4, wherein the method further comprises:
performing, by the first communication unit, a specified operation based on the first data and the second data to obtain the first synchronization data.

7. The method according to claim 5 or 6, wherein the specified operation is indicated by the first compute unit.

8. The method according to claim 7, wherein the specified operation comprises one or more of the following: a mathematical operation and a reordering operation.

9. The method according to any one of claims 4 to 8, wherein the synchronization preparation request carries a destination storage address used to store the first synchronization data, and the providing, by the first communication unit, the first synchronization data for the first compute unit comprises:
storing, by the first communication unit, the first synchronization data in the destination storage address, so that the first compute unit obtains the first synchronization data from the destination storage address.

10. The method according to any one of claims 4 to 9, wherein the synchronization preparation request carries a source storage address used to store the first data, and before the performing, by the first communication unit, the operation on the first data, the method further comprises:
obtaining, by the first communication unit, the first data from the source storage address.

11. The method according to any one of claims 4 to 10, wherein the first compute device further comprises a first shared storage area, both the first communication unit and the second communication unit are capable of reading data stored in the first shared storage area, and the performing, by the first communication unit, the operation on the first data, enabling the second communication unit to obtain the first data comprises:
storing, by the first communication unit, the first data in the first shared storage area, enabling the second communication unit to read the first data from the first shared storage area.

12. The method according to any one of claims 4 to 11, wherein the second compute device further comprises a second shared storage area, both the first communication unit and the second communication unit are capable of reading data stored in the second shared storage area, and the obtaining, by the first communication unit, the second data from the second communication unit comprises:
reading, by the first communication unit, the second data from the second shared storage area associated with the second communication unit, wherein the second shared storage area associated with the second communication unit is a shared storage area to which the second communication unit writes the second data.

13. The method according to any one of claims 1 to 12, wherein before the performing, by the first communication unit, the data synchronization operation, the method further comprises:
obtaining, by the first communication unit, the synchronization initiation request transmitted by the first compute unit; and
determining, by the first communication unit, that the second communication unit is capable of performing the data synchronization operation.

14. A first compute device, wherein the first compute device comprises a first compute unit and a first communication unit, wherein
the first compute unit is configured to transmit, before obtaining first data, a synchronization preparation request to the first communication unit, wherein the synchronization preparation request indicates the first communication unit to perform a data synchronization operation based on the first data;
the first communication unit is configured to perform, based on the synchronization preparation request, a preparation operation needed for the data synchronization operation;
the first compute unit is further configured to transmit, after obtaining the first data, a synchronization initiation request to the first communication unit, wherein the synchronization initiation request indicates the first communication unit to initiate the data synchronization operation;
the first communication unit is further configured to send a notification to a second communication unit based on the synchronization initiation request, wherein the notification indicates that the first communication unit is capable of performing the data synchronization operation, the second communication unit belongs to a second compute device, and data synchronization needs to be performed between the second compute device and the first compute device; and
the first communication unit is further configured to perform the data synchronization operation after all communication units in multiple compute devices that need to perform data synchronization with the first compute device are capable of performing the data synchronization operation.

15. The first compute device according to claim 14, wherein
the first communication unit is further configured to obtain the synchronization initiation request after completing the preparation operation.

16. The first compute device according to claim 14 or 15, wherein the first compute device further comprises a first message storage area; and
the first compute unit is specifically configured to write the synchronization preparation request to the first message storage area, and the first communication unit reads the synchronization preparation request from the first message storage area; and/or
the first compute unit is specifically configured to write the synchronization initiation request to the first message storage area, and the first communication unit reads the synchronization initiation request from the first message storage area.

17. The first compute device according to any one of claims 14 to 16, wherein
the first communication unit is specifically configured to perform an operation on the first data, enabling the second communication unit to obtain the first data;
the first communication unit is specifically configured to obtain second data from the second communication unit, wherein the second data is data based on which the second communication unit performs the data synchronization operation; and
the first communication unit is specifically configured to provide first synchronization data for the first compute unit, wherein the first synchronization data is obtained by the first communication unit based on the second data.

18. The first compute device according to claim 17, wherein
the first communication unit is further configured to perform a specified operation based on the second data to obtain the first synchronization data.

19. The first compute device according to claim 17, wherein
the first communication unit is further configured to perform a specified operation based on the first data and the second data to obtain the first synchronization data.

20. The first compute device according to claim 18 or 19, wherein the specified operation is indicated by the first compute unit.

21. The first compute device according to claim 20, wherein the specified operation comprises one or more of the following: a mathematical operation and a reordering operation.

22. The first compute device according to any one of claims 17 to 21, wherein the synchronization preparation request carries a destination storage address used to store the first synchronization data; and
the first communication unit is specifically configured to store the first synchronization data in the destination storage address, so that the first compute unit obtains the first synchronization data from the destination storage address.

23. The first compute device according to any one of claims 17 to 22, wherein the synchronization preparation request carries a source storage address used to store the first data; and
the first communication unit is further configured to obtain the first data from the source storage address.

24. The first compute device according to any one of claims 17 to 23, wherein the first compute device further comprises a first shared storage area, and both the first communication unit and the second communication unit are capable of reading data stored in the first shared storage area; and
the first communication unit is specifically configured to store the first data in the first shared storage area, enabling the second communication unit to read the first data from the first shared storage area.

25. The first compute device according to any one of claims 17 to 24, wherein the second compute device further comprises a second shared storage area, and both the first communication unit and the second communication unit are capable of reading data stored in the second shared storage area; and
the first communication unit is specifically configured to read the second data from the second shared storage area associated with the second communication unit, wherein the second shared storage area associated with the second communication unit is a shared storage area to which the second communication unit writes the second data.

26. The first compute device according to any one of claims 14 to 25, wherein
the first communication unit is further configured to obtain the synchronization initiation request transmitted by the first compute unit; and
the first communication unit is further configured to determine that the second communication unit is capable of performing the data synchronization operation.

27. A compute device, comprising a processor and a storage, wherein the storage stores program instructions, and the processor runs the program instructions, so that the compute device performs the method according to any one of claims 1 to 13.

28. A compute device cluster, comprising multiple compute devices, wherein the multiple compute devices comprise multiple processors and multiple storages, the multiple storages store program instructions, and the multiple processors run the program instructions, so that the compute device cluster performs the method according to any one of claims 1 to 13.

29. A computer program product comprising instructions, wherein when the instructions are run by a compute device cluster, the compute device cluster is enabled to perform the method according to any one of claims 1 to 13.

30. A computer-readable storage medium, comprising program instructions, wherein when the program instructions are run on a compute device, the compute device is enabled to perform the method according to any one of claims 1 to 13.
